# EUROPEAN PATENT SPECIFICATION

(11) **EP 3 772 984 B1**
(45) Date of publication and mention of the grant of the patent: **16.02.2022**
(21) Application number: 19710800.4
(22) Date of filing: 01.03.2019
(51) Int. Cl.: A23K 20/00, A23K 20/10, A23K 20/20, A23K 50/30, A23K 50/60

(54) **COMPOSITION OF A FEED ADDITIVE FOR ANIMALS AND METHOD TO ADMINISTER THE ADDITIVE**
FUTTERZUSATZZUSAMMENSETZUNG FÜR TIERE UND VERFAHREN ZUR VERABREICHUNG DER ZUSATZZUSAMMENSETZUNG
COMPOSITION D'ADDITIF ALIMENTAIRE POUR ANIMAUX ET PROCÉDÉ POUR ADMINISTRER L'ADDITIF

(30) Priority: 29.03.2018 BE 201805213
(43) Date of publication of application: 17.02.2021
(73) Proprietor: FARM@NUTRITION, besloten vennootschap met beperkte aansprakelijkheid, 2200 Herentals (BE)
(72) Inventor: DIERCKX, Roland Charles, 2200 Herentals (BE)
(74) Representative: Donné, Eddy
(86) International application number: PCT/IB2019/051670
(87) International publication number: WO 2019/186293

(56) References cited:
- US-A1- 2011 104 073
- US-A1- 2011 129 417
- US-A1- 2014 249 351
- US-A1- 2017 042 848
- US-A1- 2017 095 508
- YANHONG LIU ET AL: "Non-antibiotic feed additives in diets for pigs: A review", ANIMAL NUTRITION, vol. 4, no. 2, 8 February 2018 (2018-02-08), pages 113-125, XP055518473, ISSN: 2405-6545, DOI: 10.1016/j.aninu.2018.01.007
- MONTAGNE L ET AL: "Effect of diet composition on postweaning colibacillosis in piglets", JOURNAL OF ANIMAL SCIENCE, AMERICAN SOCIETY OF ANIMAL SCIENCE, US, vol. 82, no. 8, 1 August 2004 (2004-08-01) , page 2364, XP002685557, ISSN: 0021-8812, DOI: 10.2527/2004.8282364X
- MELIN L ET AL: "Aspects on Feed Related Prophylactic Measures Aiming to Prevent Post Weaning Diarrhoea in Pigs", ACTA VETERINARIA SCANDINAVICA, BIOMED CENTRAL LTD, LO, vol. 43, no. 4, 31 December 2002 (2002-12-31), pages 231-245, XP021026411, ISSN: 1751-0147, DOI: 10.1186/1751-0147-43-231
- Z Mroz: "Organic Acids as potential Alternatives to antibiotic growth promoters for pigs", Advances in Pork Production, 1 January 2005 (2005-01-01), pages 169-169, XP055518659, Retrieved from the Internet: URL:https://www.google.nl/url?sa=t&rct=j&q =&esrc=s&source=web&cd=4&ved=2ahUKEwjxhoSF lp_eAhUKKFAKHRAZBN0QFjADegQIBRAC&url=http: //citeseerx.ist.psu.edu/viewdoc/download?d oi=10.1.1.457.1924&rep=rep1&type=pdf&usg=A OvVaw2zU0u-e6skmNGzlbUlh2yD
- LOH TECK CHWEN ET AL: "The Effects of Iron Supplementation in Preweaning Piglets", MAL J NUTR, vol. 7, no. 1&2, 1 January 2001 (2001-01-01), pages 41-49, XP055453587,
- ALINY KÉTILIM NOVAIS ET AL: "The effect of supplementing sow and piglet diets with different forms of iron", REVISTA BRASILEIRA DE ZOOTECNIA, vol. 45, no. 10, 1 October 2016 (2016-10-01), pages 615-621, XP055518471, DOI: 10.1590/S1806-92902016001000006
- SUN XIA ET AL: "Effect of nanoscale zero-valent iron confined in mesostructure onEscherichia coli", ENVIRONMENTAL SCIENCE AND POLLUTION RESEARCH INTERNATIONAL, ECOMED, LANDSBERG, DE, vol. 24, no. 30, 14 September 2017 (2017-09-14), pages 24038-24045, XP036340258, ISSN: 0944-1344, DOI: 10.1007/S11356-017-0101-4 [retrieved on 2017-09-14]
- JAMES T. NURMI ET AL: "Characterization and Properties of Metallic Iron Nanoparticles: Spectroscopy, Electrochemistry, and Kinetics", ENVIRONMENTAL SCIENCE & TECHNOLOGY, vol. 39, no. 5, 1 March 2005 (2005-03-01), pages 1221-1230, XP055581909, US ISSN: 0013-936X, DOI: 10.1021/es049190u
- ALYMOV M I ET AL: "Preparation and characterization of iron nanoparticles protected by an oxide film", INORGANIC MATERIALS, PLENUM PUBLISHING CO., NEW YORK, NY, US, vol. 53, no. 9, 20 August 2017 (2017-08-20), pages 911-915, XP036300753, ISSN: 0020-1685, DOI: 10.1134/S0020168517090011 [retrieved on 2017-08-20]
- SUSANNE MAKOTA ET AL: "Metallic iron for water treatment: leaving the valley of confusion", APPLIED WATER SCIENCE, vol. 7, no. 8, 31 July 2017 (2017-07-31), pages 4177-4196, XP055582030, ISSN: 2190-5487, DOI: 10.1007/s13201-017-0601-x
- MARAPPAN GOPI ET AL: "Role of Nanoparticles in Animal and Poultry Nutrition: Modes of Action and Applications in Formulating Feed Additives and Food Processing", INTERNATIONAL JOURNAL OF PHARMACOLOGY, vol. 13, no. 7, 1 July 2017 (2017-07-01), pages 724-731, XP55582086, PK ISSN: 1811-7775, DOI: 10.3923/ijp.2017.724.731

## Description

The present invention relates to a composition for a feed additive and a method to administer the additive.

In particular, the invention is intended to prevent E. coli infections, especially in very young animals.

It is known that young animals, for example in pig farming, are often separated from their weaning mothers at an early stage, after which their feed is switched to industrial feed.

It is also known that the animals that switched to industrial feed react to this with diarrhoea. To remedy this, medicated feeds are made that contain antibiotics such as Colistin.

A disadvantage of this preventive way of working with antibiotics is that it encourages the formation of antibiotic-resistant bacteria.

To avoid the use of antibiotics, feed containing zinc oxide as an active ingredient is also used.

The CVMP (Committee for Medicinal Products for Veterinary Use) already issued a negative opinion on the use of zinc oxide in March 2017, because the advantages of zinc oxide for diarrhoea prevention do not outweigh the risks of accumulation of the heavy metal zinc in the environment. In the Netherlands the use of zinc oxide is already prohibited.

US2017/042848 discloses a feed supplement containing FeIII complexes.US2017/095508 discloses an antimicrobial feed supplement comprising clay which comprises Fe III.

The purpose of the present invention is to provide a solution to the aforementioned and other disadvantages, by providing for a feed additive that allows to prevent the occurrence of diarrhoea in young animals after switching to industrial feed.

To this end, the invention relates to a composition of a feed additive for animals that contains metallic iron in the form of nanoparticles smaller than 300 nm, and at least one glycerol derivative.

The glycerol derivative may be propylene glycol (C₃H₈O₂) which has a protective effect and prevents oxidation of the metallic Fe° nanoparticles.

The glycerol derivative may also be butyric acid - monoglycerol ester (C₇H₁₄O₄) or be derived from another fatty acid. The butyric acid-monoglycerol ester increases the solubility of metallic Fe°nanoparticles in drinking water.

The butyric acid-monoglycerol ester (C₇H₁₄O₄) is added to the feed additive mixture at a ratio of 10 wt% mixture/90 wt% butyric acid-monoglycerol ester.

In a preferred embodiment the feed additive for animals has the following composition:
- a mixture consisting of
   1) 20 wt% of metallic iron (Fe⁰) in nanoparticles smaller than 50 nm with a specific surface area greater than 25 m²/g and a density of 1,20 g/cm³ at 20°C;
   2) 4-12 wt% magnetite (Fe₃O₄);
   3) 0-1 wt% carbon (C);
   4) 71-72 wt% propylene glycol (C₃H₈O₂)
and butyric acid-monoglycerol ester (C₇H₁₄O₄).

The present magnetite (Fe₃O₄) can also be iron sulphide (FeS) which are residual fractions of the used catalysts, just as the present carbon (C).

The feed additive mixture according to the invention can be further diluted in monoglycerol or a monoglycerol ester before dissolving an appropriate dose in drinking water.

The monoglycerol or monoglycerol ester stabilises the mixture when applied in drinking water and protects the iron nanoparticles against oxidation by oxygen.

The invention also relates to a method to administer the feed additive to animals such as pigs, cattle, poultry, goats, sheep, and farm animals.

In this method, the feed additive is added to the drinking water for animals in a concentration of at least 10 mg Fe⁰/litre drinking water or 10 ppm Fe⁰.

An advantage of this method is that in zootechnical trials on piglets, no observable side effect on piglets was observed and a positive influence on the purity of drinking water pipes was observed.

The effect of the feed additive is based on the impact on the assimilation of iron (Fe²⁺) by E. coli bacteria in the intestine, thus combating the proliferation of E. coli.

E. coli bacteria have a size of about one micrometre, while the iron nanoparticles Fe° have a size smaller than 300 nm. Large nanoparticles of 300 nm are less effective than smaller ones, with particles of 100 nm already showing a good noticeable effect on the prevention of diarrhoea in young piglets and this effect is even stronger in particles of 50 nm for example.

The use of the feed additive in the small amounts with which it is administered leads to iron oxides that do not pose a risk to the environment, as iron oxides are found naturally in the soil.

To guarantee the efficient operation of the metallic iron, oxidising products such as peroxides, dichloro, ozone treatment or other disinfectants or aeration of the drinking water should be avoided.

The butyric acid-monoglycerol ester has a protective and solvating effect on the metallic iron nanoparticles, and helps keep them dissolved in water. Butyric acid-monoglycerol ester (C₇H₁₄O₄) is added to the feed additive mixture at a ratio of 10 wt% mixture/90 wt% butyric acid-monoglycerol ester

With the intention of better showing the characteristics of the invention, hereinafter, by way of an example without any limiting nature, a preferred application is described of the composition for a feed additive for animals and a method to administer the additive according to the invention, with reference to the accompanying drawings, wherein:
figure 1 shows the chemical structure of butyric acid-monoglycerol ester;
figure 2 schematically shows the feed additive according to the invention;
figure 3 schematically shows the method to administer the feed additive to piglets.

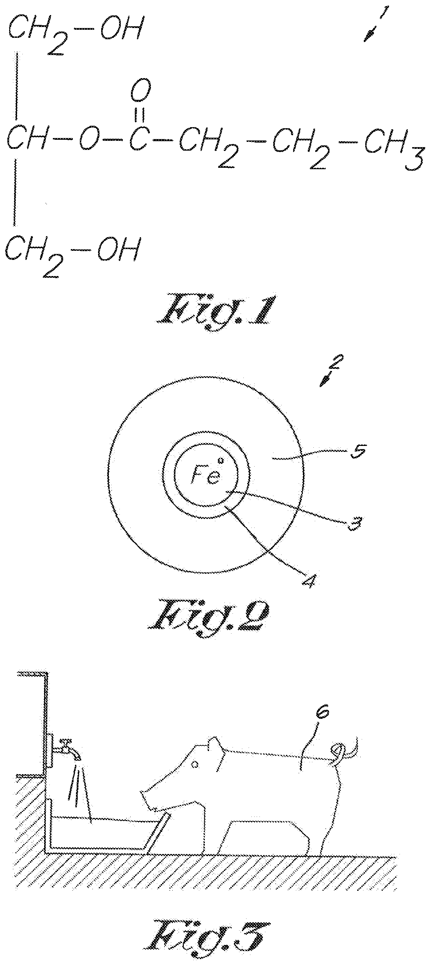

Figure 1 schematically shows the chemical structure 1 of butyric acid-monoglycerol ester (C₇H₁₄O₄), which can be part of the feed additive, according to the invention.

Figure 2 schematically shows the structure of nanoparticles of metallic iron (Fe⁰) smaller than 50 nm 3, surrounded by a layer 4 of propylene glycol. For use in drinking water, another solvating layer 5 of butyric acid monoglycerol ester is required to keep the metallic iron dissolved.

Figure 3 schematically shows the method by which the feed additive according to the invention is administered to young piglets or other animals, namely by adding 1 litre of feed additive to 1000 litres of drinking water for the animals, so that the drinking water then contains 20 mg Fe⁰ /litre of water or 20 ppm Fe⁰. The drinking water is administered from the moment the piglets 6 are switched to industrial feed to prevent diarrhoea. To this end the drinking water must contain at least 10 mg Fe⁰/litre of drinking water or 10 ppm Fe⁰.

The feed additive presumably acts to inhibit the proliferation of E. coli bacteria in the intestine of the young animals, through the assimilation of metallic iron (Fe⁰) by the E. coli bacteria, thus preventing the development of diarrhoea.

Obviously, the stabilising propylene glycol can be replaced with variant structures with the same effect, provided they are also edible for the animals.

The solvating butyric acid-monoglycerol ester can also be replaced by variant structures with the same effect as long as they are edible and not harmful to the environment.

The nanoparticles of metallic iron (Fe⁰) need to be protected against oxidation, otherwise they will quickly oxidise into iron oxides in the air, which do not provide the desired inhibitory effect on E. coli.

The present invention is by no means limited to the embodiment described as an example and shown in the drawings, but such a composition of a feed additive and a method to administer the additive with nanoparticles of metallic iron can be realised according to different variants without departing from the scope of the invention, as described in the following claims.

## Claims

1. Composition of a feed additive for animals **characterised in that** the feed additive contains:
- metallic iron in the form of nanoparticles that are smaller than 300 nm; and
- at least one glycerol derivative.

2. Composition of a feed additive according to claim 1, **characterised in that** at least one glycerol derivative consists of propylene glycol (C₃H₈O₂).

3. Composition of a feed additive according to claim 1, **characterised in that** at least one glycerol derivative consists of butyric acid-monoglycerol ester (C₇H₁₄O₄).

4. - Composition of a feed additive for animals according to claim 1, **characterised in that** it contains at least a mixture consisting of:
- 20 wt% of metallic iron in nanoparticles smaller than 50 nm with a specific surface area greater than 25 m²/g and a density of 1.20 g/cm³ at 20°C;
- 2) 4-12 wt% magnetite (Fe₃O₄);
- 3) 0-1 wt% carbon (C);
- 4) 71-72 wt% propylene glycol (C₃H₈O₂);

5. - Composition of a feed additive according to claim 4, **characterised in that** butyric acid-monoglycerol ester (C₇H₁₄O₄) is added to the feed additive mixture at a ratio of 10 wt% mixture/90 wt% butyric acid-monoglycerol ester.

6. - Method to administer a feed additive for animals, **characterised in that** a composition according to claim 1 is added to the drinking water for animals in a concentration of at least 10 mg Fe⁰/litre drinking water or 10 ppm Fe⁰.

## Patentansprüche

1. Zusammensetzung eines Futtermittelzusatzes für Tiere, **dadurch gekennzeichnet, dass** der Futtermittelzusatz Folgendes enthält:
- metallisches Eisen in Form von Nanopartikeln, die kleiner als 300 nm sind; und
- mindestens ein Glycerinderivat.

2. Zusammensetzung eines Futtermittelzusatzes nach Anspruch 1, **dadurch gekennzeichnet, dass** mindestens ein Glycerinderivat aus Propylenglykol (C₃H₈O₂) besteht.

3. Zusammensetzung eines Futtermittelzusatzes nach Anspruch 1, **dadurch gekennzeichnet, dass** mindestens ein Glycerinderivat aus Buttersäure-Monoglycerolester (C₇H₁₄O₄) besteht.

4. - Zusammensetzung eines Futtermittelzusatzes für Tiere nach Anspruch 1, **dadurch gekennzeichnet, dass** er mindestens eine Mischung enthält, die aus Folgendem besteht:
- 20 Gew.-% metallisches Eisen in Nanopartikeln, die kleiner als 50 nm sind, mit einer spezifischen Oberfläche von mehr als 25 m²/g und einer Dichte von 1,20 g/cm³ bei 20 °C;
- 2) 4-12 Gew.-% Magnetit (Fe₃O₄);
- 3) 0-1 Gew.-% Kohlenstoff (C);
- 4) 71-72 Gew.-% Propylenglykol (C₃H₈O₂);

5. - Zusammensetzung eines Futtermittelzusatzes nach Anspruch 4, **dadurch gekennzeichnet, dass** Buttersäure-Monoglycerinester (C₇H₁₄O₄) der Futtermittelzusatzstoffmischung in einem Verhältnis von 10 Gew.-% Mischung/90 Gew.-% Buttersäure-Monoglycerinester zugesetzt wird.

6. - Verfahren zur Verabreichung eines Futtermittelzusatzes für Tiere, **dadurch gekennzeichnet, dass** dem Trinkwasser für Tiere eine Zusammensetzung nach Anspruch 1 in einer Konzentration von mindestens 10 mg Fe⁰/Liter Trinkwasser oder 10 ppm Fe⁰ zugesetzt wird.

## Revendications

1. Composition d'un additif d'aliments pour animaux, **caractérisée en ce que** l'additif d'aliments pour animaux contient :
- du fer métallique sous la forme de nanoparticules qui sont inférieures à 300 nm ; et
- au moins un dérivé du glycérol.

2. Composition d'un additif d'aliments pour animaux selon la revendication 1, **caractérisée en ce que** ledit au moins un dérivé du glycérol est constitué de propylène glycol (C₃H₈O₂).

3. Composition d'un additif d'aliments pour animaux selon la revendication 1, **caractérisée en ce que** ledit au moins un dérivé du glycérol est constitué de l'ester monoglycérique de l'acide butyrique (C₇H₁₄O₄).

4. Composition d'un additif d'aliments pour animaux selon la revendication 1, **caractérisée en ce qu'**elle contient au moins un mélange qui est constitué par :
- 20 % en poids de fer métallique dans des nanoparticules inférieures à 50 nm qui possèdent une surface spécifique supérieure à 25 m²/g et une masse volumique de 1,20 g/cm³ à 20 °C ;
- 2) de 4 à 12 % en poids de magnétite (Fe₃O₄) ;
- 3) de 0 à 1 % en poids de carbone (C) ;
- 4) de 71 à 72 % en poids de propylène glycol (C₃H₈O₂).

5. Composition d'un additif d'aliments pour animaux selon la revendication 4, **caractérisée en ce que** l'ester monoglycérique de l'acide butyrique (C₇H₁₄O₄) est ajouté au mélange de l'additif d'aliments pour animaux dans un rapport de 10 % en poids du mélange/90 % en poids de l'ester monoglycérique de l'acide butyrique.

6. Procédé destiné à l'administration d'un additif d'aliments pour animaux, **caractérisé en ce que** l'on ajoute une composition selon la revendication 1 à l'eau de boisson destinée à des animaux en une concentration d'au moins 10 mg Fe⁰/litre d'eau de boisson ou de 10 ppm de Fe⁰.
